# EUROPÄISCHE PATENTSCHRIFT

(11) **EP 0 505 602 B1**
(45) Veröffentlichungstag und Bekanntmachung des Hinweises auf die Patenterteilung: **20.09.1995**
(21) Anmeldenummer: 91105065.6
(22) Anmeldetag: 28.03.1991
(51) Int. Cl.: G05F 1/571, G05F 1/573, H02H 3/087

(54) **Schaltungsanordnung zum Schutz des Bordnetzes eines Kraftfahrzeugs**
Protection circuit for the electrical system of a vehicle
Circuit de protection du réseau d'alimentation de bord dans un véhicule automobile

(43) Veröffentlichungstag der Anmeldung: 30.09.1992
(73) Patentinhaber: SIEMENS AKTIENGESELLSCHAFT, 80333 München (DE)
(72) Erfinder: Pohl, Klaus, Dipl.-Ing., W-8900 Augsburg (DE); Fisch, Alfons, Dipl.-Ing. (FH), W-8411 Falkenstein (DE)

(56) Entgegenhaltungen:
- DE-A- 3 537 920
- DE-A- 3 706 264
- FR-A- 2 634 601
- US-A- 4 594 633
- IBM TECHNICAL DISCLOSURE BULLETIN.Bd. 18, Nr. 8, Januar 1976, New York,US;Seite 2430; R.A. MADDOX: "Overcurrent Protector with Automatic Reset"
- IBM TECHNICAL DISCLOSURE BULLETIN.Bd. 5, Nr. 11, April 1963, New York,US;Seite 51; B.K. ERDMAN, JR.: "Circuit Breaker"

## Beschreibung

Die Erfindung betrifft eine Schaltungsanordnung gemäß dem Oberbegriff von Patentanspruch 1.

In der DE-OS 35 37 920 ist eine Schaltungsanordnung mit einem Schutz gegen eine Überspannung beschrieben, insbesondere für die Verwendung in Kraftfahrzeugen. Diese Schaltungsanordnung weist einen Eingang auf, der mit einer Spannungsquelle verbunden ist, und einen Ausgang, an dem eine Bezugsspannung für ei-einen elektrischen Verbraucher zur Verfügung gestellt wird. Die Schaltungsanordnung nimmt alle elektrischen Belastungen auf, die sich an ihrem Eingang einstellen. Insbesondere nimmt sie zum Schutz des Verbrauchers die Überspannungen auf, die sich bei einem Defekt im Bordnetz eines Kraftfahrzeugs ergeben können.

Die bekannte Schaltungsanordnung benötigt außer der Spannungsquelle am Eingang eine weitere Spannungsquelle und sie bietet lediglich Schutz für die Last an ihrem Ausgang, wenn an ihrem Eingang eine Überspannung anliegt.

Der Erfindung liegt die Aufgabe zugrunde, eine Schaltungsanordnung für ein Bordnetz eines Kraftfahrzeugs gemäß dem Oberbegriff des Patentanspruchs 1 zu schaffen, die die Spannungsquelle am Eingang vor Zerstörung schützt.

Diese Aufgabe wird erfindungsgemäß durch eine Schaltungsanordnung mit den Merkmalen des Patentanspruchs 1 gelöst.

Vorteilhafte Ausgestaltungen der Erfindung sind in den Unteransprüchen gekennzeichnet. Die Vorteile der Erfindung liegen unter anderem darin, daß die Schaltungsanordnung aus preiswerten und einfachen Bauelementen aufgebaut ist und keine weitere Bezugsspannung benötigt. Sie kann als integrierter Schaltkreis ausgebildet sein.

Ein Ausführungsbeispiel der Erfindung ist in den Zeichnungen dargestellt und wird im folgenden näher beschrieben. Es zeigen:
- Figur 1:: ein Blockschaltbild der erfindungsgemäßen Schaltungsanordnung,
- Figur 2:: die Schaltungsanordnung nach Figur 1 in ausführlicherer Darstellung.

Verschiedene elektrische Bauelemente in Kraftfahrzeugen, wie z.B. Potentiometer, die als Sensoren eingesetzt werden, benötigen eine Referenzspannung, auf die sich analoge Meßausgaben beziehen können. Wenn die Referenzspannung direkt von einem Steuergerät geliefert wird, besteht die Gefahr, daß bei einer Überlastung am Ausgang des Steuergeräts, wie beispielsweise einen Kurzschluß gegen Masse, oder bei einer Überspannung, wie beispielsweise ein Kurzschluß gegen die Batteriespannung, das Steuergerät durch einen zu großen Ausgangsstrom zerstört wird. Dies verhindert die erfindungsgemäße Schaltungsanordnung, die zwischen dem Steuergerät und einem Verbraucher angeordnet ist.

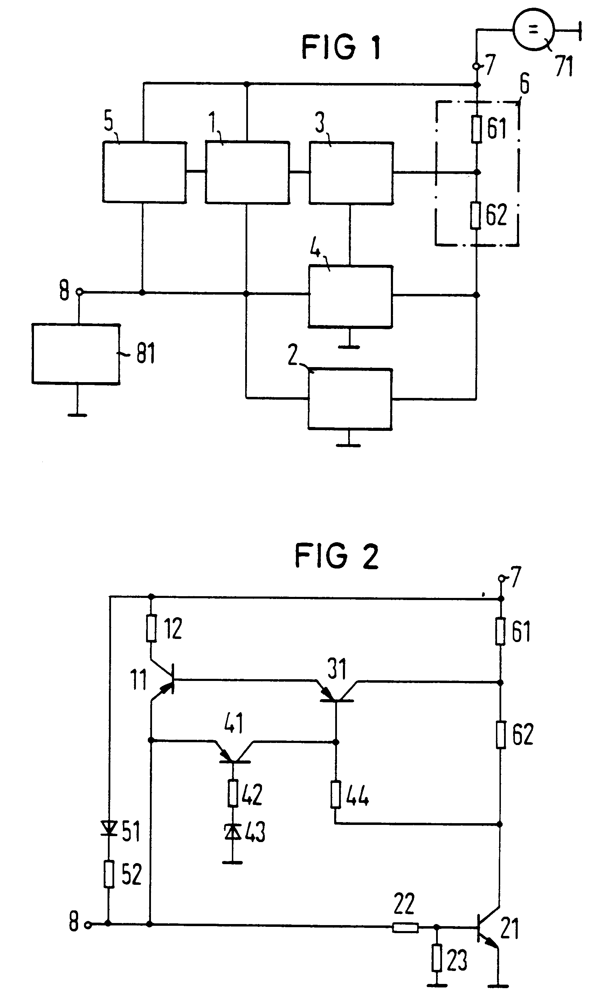

Die Schaltungsanordnung wird in einem Bordnetz eines Kraftfahrzeugs eingesetzt und weist einen Stromstabilisator 1 (Figur 1), einen Überlastschalter 2, einen Schalter 3, einen Überspannungsschalter 4, einen Strombegrenzer 5 und einen Spannungsteiler 6 auf. An ihren Eingang 7 ist das als Spannungsquelle 71 dienende Steuergerät und an ihren Ausgang 8 ein elektrischer Verbraucher 81 angeschlossen.

Der Stromstabilisator 1 regelt den Ausgangsstrom, damit die Referenzspannung, die auch gleich der Ausgangsspannung der Schaltungsanordnung ist, annähernd konstant bleibt. Der Stromstabilisator 1 wird von dem Schalter 3 je nach Ausgangsstrom gesteuert. Durch den Überlastschalter 2 wird beim Auftreten einer Überlast, der Überlaststrom vom Eingang 7 zum Ausgang 8 über den Strombegrenzer 5 geleitet und durch diesen begrenzt. Bei einem Kurzschluß am Ausgang 8 gegen eine Überspannung wird durch den Überspannungsschalter 4 ein Kurzschlußstrom begrenzt und vom Ausgang zur Masse geleitet.

Zwei Widerstände 61 und 62 des Spannungsteilers 6 legen einen Arbeitspunkt für den Schalter 3 fest und verhindern außerdem, daß der Strom, der bei der Überspannung vom Eingang 7 zur Masse fließt, die Spannungsquelle 71 zu stark belastet.

Ein pnp-Transistor 11 (Figur 2) und ein mit seinem Kollektor verbundener Widerstand 12 bilden den Stromstabilisator 1. Der Schalter 3 ist als ein pnp-Transistor 31 realisiert, dessen Emitter mit der Basis des Transistors 11 verbunden ist. Der Kollektor des Transistors 31 ist mit dem Teilerpunkt des Spannungsteilers 6, d.h. mit den Widerständen 61 und 62 verbunden.

Als Überlastschalter 2 wirkt ein npn-Transistor 21, dessen Emitter auf einer Masse liegt, die dem Eingang 7 und dem Ausgang 8 gemeinsam ist. Seine Basis wird über einen weiteren Spannungsteiler mit zwei Widerständen 22 und 23 durch die Spannung, die am Ausgang 8 anliegt, gesteuert. Der Kollektor des Transistors 21 ist über den Spannungsteiler 6 mit dem Eingang 7 verbunden.

Der Überspannungsschalter 4 ist zwischen dem Ausgang 8 und dem Spannungsteiler 6 angeordnet. Er wird realisiert durch einen pnp-Transistor 41, einen Widerstand 42, eine Zener-Diode 43 und einen Widerstand 44. Die Basis des Transistors 41 ist über den Widerstand 42 und die Zener-Diode 43 mit Masse verbunden. Der Kollektor des Transistors 41 führt einerseits zu der Basis des Transistors 31 und andererseits zu dem Widerstand 44, der seinerseits sowohl mit dem Widerstand 62 als auch mit dem Kollektor des Transistors 21 verbunden ist.

Der Strombegrenzer 5 ist als eine Diode 51 in Reihe mit einem Widerstand 52 ausgeführt. Er ist zwischen dem Eingang 7 und dem Ausgang 8 und parallel zu dem Stromstabilisator 1 angeordnet.

In dem Normalbetrieb wird der Ausgangsstrom in gewissen Grenzen geregelt, wenn am Eingang 7 eine Konstantspannung anliegt. Die Ausgangsspannung ist dann um einen durch die Schaltungsanordnung verursachten Spannungsabfall kleiner als die Eingangsspannung. Die Schaltungsanordnung kann zwei weitere Betriebszustände einnehmen, wenn sich aufgrund externer Einflüsse die Ausgangsspannung ändert. Dies ist beispielsweise der Fall, wenn durch einen Defekt ein Kurzschluß am Ausgang 8 gegen Masse oder gegen eine Überspannung vorliegt.

Am Eingang 7 liegt eine Spannung von beispielsweise +5 V an. Diese Spannung kann von einem Zündsteuergerät geliefert werden. Im Normalbetrieb wird dadurch der Transistor 21 über die Diode 51, den Widerstand 52 und den Widerstand 22 gesteuert und leitend. Da die Kollektor-Emitter-Strecke des Transistors 21 in diesem Fall niederohmig ist, liegt am Kollektor eine Spannung nahe 0V. Diese Spannung liegt somit über den Widerstand 44 auch an der Basis des Transistors 31 an. Dadurch leitet der Transistor 31 und folglich auch der Transistor 11.

Wenn der Wert des Widerstands 12 viel kleiner ist als der des Widerstands 52 und der der Reihenschaltung der Widerstände 61 und 62, so fließt über den Widerstand 12 und den Transistor 11 der größte Teil des Ausgangsstroms. Je kleiner der Wert des Widerstands 12 ist, desto geringer ist der durch den Ausgangsstrom verursachte Spannungsabfall zwischen dem Eingang 7 und dem Ausgang 8.

In dem hier beschriebenen Beispiel beträgt der Wert des Widerstands 12 etwa 2,7 Ohm. Damit in diesem Betriebszustand der Transistor 41 sperrt, hat die Zener-Diode 43 eine Durchbruchspannung, die größer ist als die Eingangsspannung von +5 V minus die Emitter-Basis-Spannung des Transistors 41 von etwa 0,7 V, d.h. die Durchbruchspannung muß größer sein als +4,3 V.

Wenn der Ausgangsstrom, der durch den Widerstand 12 und den Transistor 11 fließt, ansteigt, dann wird der Spannungsabfall vom Eingang 7 zum Ausgang 8 größer, so daß der Transistor 21 und damit der Transistor 31 vom leitenden Zustand auf den sperrenden Zustand schaltet. Somit wird der Transistor 11 von dem Transistor 31 gesteuert, die Kollektor-Emitter-Strecke des Transistors 11 wird hochohmiger und der Ausgangsstrom sinkt wieder. Der Ausgangsstrom wird bei diesem Ausführungsbeispiel geregelt, wenn er kleiner als 10 mA ist.

Die Schaltungsanordnung nimmt einen zweiten Betriebszustand ein, wenn durch einen Defekt am Ausgang 8 eine Überlastung des Ausgangs vorliegt, beispielsweise durch einen Kurzschluß gegen Masse. Durch die Überlastung steigt der Ausgangsstrom stark an, die Ausgangsspannung bricht zusammen und beträgt dann nur noch etwa 0 Volt. Der Transistor 21 sperrt und mit ihm der Transistor 31, der den Transistor 11 sperrt. In diesem Betriebszustand fließt der Überlaststrom vom Eingang 7 über die Diode 51 und den Widerstand 52 zum Ausgang 8. Der Widerstand 52 begrenzt den Kurzschlußstrom, so daß die Stromquelle 71 nicht überlastet wird. Die Diode 51 verhindert einen Stromfluß vom Ausgang 8 zum Eingang 7.

In einem weiteren Betriebszustand kann durch einen Defekt eine Überspannung am Ausgang 8 anliegen. Diese Überspannung kann die Batteriespannung von +12 V des Bordnetzes sein. Wenn diese Überspannung die Durchbruchspannung der Zener-Diode 43, plus die Emitter-Basis-Spannung des Transistors 41 von etwa 0,7 V überschreitet, dann leitet der Transistor 41. Da der Spannungsabfall an dem Widerstand 22 gering ist, liegt die Überspannung auch an der Basis des Transistors 21 an, so daß dieser leitend wird. Somit fließt der Kurzschlußstrom vom Ausgang 8 über den den Transistor 41, den Widerstand 44 und den Transistor 21 zur Masse.

Wenn der Transistor 41 leitet, dann liegt auch eine hohe Spannung an der Basis des Transistor 31 an. Damit sperrt der Transistor 31 und eine Spannung, die etwas kleiner ist als die Überspannung, liegt an der Basis des Transistors 11 an. Da die Spannungsdifferenz zwischen der Spannung an der Basis des Transistors 11 und der Eingangsspannung die Basis-Emitter-Strecke des Transistors 11 zerstören würde, wird dieser invers betrieben.

Hierzu ist der Emitter des Transistors 11 mit dem Ausgang 8 verbunden und der Kollektor mit dem Widerstand 12, der am Eingang 7 liegt. Im Falle eines Kurzschlusses gegen eine Überspannung fließt noch ein Strom vom Eingang 7 zur Masse, der jedoch durch die Widerstände 61 und 62 begrenzt wird.

Der Wert des Widerstands 22 beträgt etwa 10 kOhm. Der Wert des Widerstands 23 und des Widerstands 42 beträgt etwa 4,7 kOhm, und der Wert des Widerstands 52 etwa 100 Ohm. Der Wert des Widerstands 44 ist etwa 5 kOhm. Der Widerstand 61 hat etwa 220 Ohm und der Widerstand 62 etwa 330 Ohm.

Bei dieser Dimensionierung der Widerstände fließt im Normalbetrieb ein Ausgangsstrom von 3 bis 8 mA. Ist der Ausgangsstrom kleiner als 10 mA, so beträgt der maximale Spannungsabfall zwischen dem Eingang 7 und dem Ausgang 8 etwa 300 mV.

Bei einem Kurzschluß gegen Masse wird die Spannungsquelle 71 mit dem Kurzschlußstrom von etwa 33 mA bis 66 mA belastet. Bei einem Kurzschluß gegen eine Überspannung, fließen maximal 10 mA vom Eingang 7 nach Masse.

Mit dieser Schaltungsanordnung fließt kein Strom in den Eingang 7, auch nicht bei einem Kurzschluß am Ausgang 8 gegen eine positive oder negative Überspannung. Bei einer Überspannung oder einer Überlast am Ausgang 8 wird die Spannungsquelle 71 nur gering belastet und somit vor Zerstörung geschützt.

Die hier beschriebene Schaltungsanordnung kann sowohl diskret aufgebaut als auch als integrierte Schaltung ausgeführt sein. Falls die Schaltung diskret aufgebaut ist, können die Transistoren 11, 31 und 41 als BC 327 und der Transistor 21 als BC 338 oder als andere, derzeitig erhältliche und funktionell gleichwertige Transistoren ausgeführt sein. Die Diode 51 ist vom Typ 1N4148 und die Zener-Diode 43 vom Typ ZPD mit einer Durchbruchspannung von 6,2 V ausgeführt.

Unter dem Begriff Bordnetz ist die gesamte elektrische Anlage in einem Kraftfahrzeug zu verstehen. Das Bordnetz beinhaltet unter anderem die Batterie, Steuergerate und sonstige elektrische Verbraucher.

## Patentansprüche

1. Schaltungsanordnung zum Schutz des Bordnetzes eines Kraftfahrzeugs mit
- einem mit einer Spannungsquelle (71) verbundenem Eingang (7),
- einem mit einem Verbraucher (81) verbundenem Ausgang (8) und
- einem dem Eingang (7) und dem Ausgang (8) gemeinsamen Masseanschluß,
**dadurch gekennzeichnet,**
- daß er einen Stromstabilisator (1) aufweist, durch den der Ausgangsstrom geregelt wird,
- daß der Stromstabilisator (1) von einem Schalter (3) in Abhängigkeit von dem Ausgangstrom gesteuert wird,
- daß er einen Überlastschalter (2) aufweist, durch den bei Auftreten einer Überlast am Ausgang (8) ein Überlaststrom vom Eingang (7) über einen Strombegrenzer (5) zum Ausgang (8) geleitet wird, und
- bei einem Kurzschluß am Ausgang (8) gegen eine Überspannung ein Kurzschlußstrom vom Ausgang über einen Überspannungsschalter (4) zur Masse geleitet wird.

2. Schaltungsanordnung nach Anspruch 1,
**dadurch gekennzeichnet,**
- daß der Stromstabilisator (1) zwischen dem Eingang (7) und dem Ausgang (8) angeordnet ist,
- daß der Überlastschalter (2) zwischen einem Spannungsteiler (6) und dem Ausgang (8) angeordnet ist,
- daß der Strombegrenzer (5) parallel zu dem Stromstabilisator (1) angeordnet ist,
- daß der Überspannungsschalter (4) zwischen dem Ausgang (8) und dem Spannungsteiler (6) angeordnet ist,
- daß der Spannungsteiler (6) mit dem Eingang (7) verbunden ist, und
- daß der Schalter (3) mit dem Teilerpunkt des Spannungsteilers (6), dem Stromstabilisator (1) und dem Überspannungsschalter (4) verbunden ist.

3. Schaltungsanordnung nach Anspruch 2,
**dadurch gekennzeichnet, daß**
- daß der Stromstabilisator (1) als ein erster Transistor (11) ausgebildet ist, dessen Kollektor mit einem ersten Widerstand (12) und dessen Emitter mit dem Ausgang (8) verbunden ist,
- daß der Überlastschalter (2) einen zweiten Transistor (21) aufweist, dessen Emitter mit Masse und dessen Basis über einen zweiten Widerstand (22) mit dem Ausgang (8) und einem dritten Widerstand (23) mit Masse verbunden ist,
- daß der Strombegrenzer (5) eine Diode (51) und einen vierten Widerstand (52) aufweist, die in Serie zueinander geschaltet sind,
- daß der Schalter (3) als ein dritter Transistor (31) ausgebildet ist, dessen Kollektor mit der Teilerpunkt des Spannungsteilers (6) und dessen Emitter mit der Basis des ersten Transistors (11) verbunden ist, und
- daß der Überspannungsschalter (4) einen vierten Transistor (41) aufweist, dessen Basis über einen fünften Widerstand (42) und eine Zener-Diode (43) mit Masse verbunden ist und dessen Kollektor mit der Basis des dritten Transistors (31) und über einen sechsten Widerstand (44) mit dem Spannungsteiler (6) verbunden ist.

4. Schaltungsanordnung nach Anspruch 3,
**dadurch gekennzeichnet, daß**
sie als intergrierter Schaltkreis ausgebildet ist.

## Claims

1. Circuit arrangement for protection of the on-board network of a motor vehicle having
- an input (7) which is connected to a voltage source (71),
- output (e) which is connected to a load (81), and
- an earth connection which is common to the input (7) and to the output (8),
characterized
- in that it has a current stabilizer (1) by means of which the output current is regulated,
- in that the current stabilizer (1) is controlled by a switch (3) as a function of the output current, in that it has an overload switch (2) by means of which an overload current is passed from the input (7) via a current limiter (5) to the output (8) in the event of an overload occurring at the output (8), and
- a short-circuit current is passed from the output via an overvoltage switch (4) to earth in the event of a short-circuit of the output (8) to an overvoltage.

2. Circuit arrangement according to Claim 1,
characterized
- in that the current stabilizer (1) is arranged between the input (7) and the output (8),
- in that the overload switch (2) is arranged between a voltage divider (6) and the output (8),
- in that the current limiter (5) is arranged in parallel with the current stabilizer (1),
- in that the overvoltage switch (4) is arranged between the output (8) and the voltage divider (6),
- in that the voltage divider (6) is connected to the input (7), and
- in that the switch (3) is connected to the division point of the voltage divider (6), to the current stabilizer (1) and to the overvoltage switch (4).

3. Circuit arrangement according to Claim 2,
characterized
- in that the current stabilizer (1) is designed as a first transistor (11) whose collector is connected to a first resistor (12) and whose emitter is connected to the output (8),
- in that the overload switch (2) has a second transistor (21) whose emitter is connected to earth and whose base is connected via a second resistor (22) to the output (8) and via a third resistor (23) to earth,
- in that the current limiter (5) has a diode (51) and a fourth resistor (52) which are connected in series with one another,
- in that the switch (3) is designed as a third transistor (31) whose collector is connected to the division point of the voltage divider (6) and whose emitter is connected to the base of the first transistor (11), and
- in that the overvoltage switch (4) has a fourth transistor (41) whose base is connected via a fifth resistor (42) and a zener diode (43) to earth and whose collector is connected to the base of the third transistor (31) and, via a sixth resistor (44), to the voltage divider (6).

4. Circuit arrangement according to Claim 3, characterized in that said circuit arrangement is designed as an integrated circuit.

## Revendications

1. Montage pour protéger le réseau de bord d'un véhicule automobile comportant
- une entrée (7) reliée à une source de tension (71),
- une sortie (8) reliée à un consommateur (81), et
- une borne de masse commune à l'entrée (7) et à la sortie (8),
caractérisé par le fait
- que le montage comporte un stabilisateur de courant (1), qui règle le courant de sortie,
- que le stabilisateur de courant (1) est commandé par un interrupteur (3) en fonction du courant de sortie,
- que le montage comporte un interrupteur de surcharge (2), grâce auquel, lors de l'apparition d'une surcharge à la sortie (8), un courant de surcharge est dérivé de l'entrée (7) à la sortie (8) par l'intermédiaire d'un limiteur de courant (5), et
- dans le cas d'un court-circuit sur la sortie (8) à une surtension, un courant de court-circuit est envoyé de la sortie à la masse par l'intermédiaire d'un interrupteur de surtension (4).

2. Montage selon la revendication 1, caractérisé en ce
- que le stabilisateur de courant (1) est raccordé entre l'entrée (7) et la sortie (8),
- que l'interrupteur de surcharge (2) est raccordé entre un diviseur de tension (6) et la sortie (8),
- que le limiteur de courant (5) est branché en parallèle avec le stabilisateur de courant (1),
- que l'interrupteur de surtension (4) est branché entre la sortie (8) et le diviseur de tension (6),
- que le diviseur de tension (6) est relié à l'entrée (7), et
- que l'interrupteur (3) est relié au point de division du diviseur de tension (6), au stabilisateur de courant (1) et à l'interrupteur de surtension (4).

3. Montage suivant la revendication 2, caractérisé par le fait
- que le stabilisateur de courant (1) est agencé sous la forme d'un premier transistor (11), dont le collecteur est relié à un première résistance (12) et dont l'émetteur est relié à la sortie (8),
- que l'interrupteur de surtension (2) comporte un second transistor (21), dont l'émetteur est relié à la masse et dont la base est reliée par l'intermédiaire d'une seconde résistance (22) à la sortie (8) et par l'intermédiaire d'une troisième résistance (23) à la masse,
- que le limiteur de courant (5) comporte une diode (51) et une quatrième résistance (52), qui sont branchées en série,
- que l'interrupteur (3) est agencé sous la forme d'un troisième transistor (31), dont le collecteur est relié au point de division du diviseur de tension (6) et dont l'émetteur est relié à la base du premier transistor (11), et
- que l'interrupteur de surtension (4) comporte un quatrième transistor (41), dont la base est reliée à la masse par l'intermédiaire d'une cinquième résistance (42) et d'une diode Zener (43) et dont le collecteur est relié à la base du troisième transistor (31) et, par l'intermédiaire d'une sixième résistance (44), au diviseur de tension (6).

4. Montage selon la revendication 3, caractérisé en ce qu'il est réalisé sous la forme d'un circuit intégré.
